# FASCICULE DE BREVET EUROPEEN

(11) **EP 3 219 948 B1**
(45) Date de publication et mention de la délivrance du brevet: **24.10.2018**
(21) Numéro de dépôt: 17157857.8
(22) Date de dépôt: 24.02.2017
(51) Int. Cl.: F01N 3/20, F01N 11/00

(54) **SYSTEME AVEC CIRCUIT HYDRAULIQUE ET CARTE ELECTRONIQUE AVEC MOYEN DE SÉCURISATION DE LA CARTE EN CAS DE FUITE DU CIRCUIT**
HYDRAULIKKREISLAUFSYSTEM UND ELEKTRONISCHE KARTE MIT SICHERUNGSMITTEL DER KARTE IM FALLE EINES LECKS IM KREISLAUF
SYSTEM WITH HYDRAULIC CIRCUIT AND ELECTRONIC CARD WITH MEANS FOR SECURING THE CARD IN THE EVENT OF LEAKAGE FROM THE CIRCUIT

(30) Priorité: 15.03.2016 FR 1652163
(43) Date de publication de la demande: 20.09.2017
(73) Titulaire: PSA Automobiles SA, 78300 Poissy (FR)
(72) Inventeur: ATTABOU, Thami, 27120 Pacy sur Eure (FR)

(56) Documents cités:
- FR-A1- 2 983 237
- JP-A- S62 150 412

## Description

La présente invention se rapporte aux systèmes de dépollution des oxydes d'azote. L'invention concerne plus particulièrement un système avec circuit hydraulique et carte électronique avec moyen de sécurisation de la carte en cas de fuite du circuit. L'invention porte aussi sur un dispositif de traitement des oxydes d'azote par réaction catalytique sélective comportant un tel système.

Depuis de nombreuses années, les constructeurs de véhicules automobiles à moteur thermique font beaucoup d'efforts pour réduire l'émission dans l'atmosphère de composés chimiques nuisibles à l'environnement produits par les moteurs thermiques lors de la combustion du carburant.

Parmi ces composés, on trouve notamment le dioxyde de carbone CO₂ ainsi que les oxydes d'azote. Pour limiter l'émission des oxydes d'azote dans l'atmosphère, une solution actuellement utilisée consiste à placer sur la ligne d'échappement du véhicule un système de traitement des oxydes d'azote, appelé système SCR (correspondant à l'acronyme anglais « Selective Catalytic Réduction »), ayant pour fonction de réduire chimiquement les oxydes d'azote en molécules de di-azote et en vapeur d'eau au moyen d'un agent réducteur. Il est connu d'utiliser comme agent réducteur de l'urée en solution aqueuse et de stocker cette solution aqueuse dans un réservoir. Un circuit d'alimentation en agent réducteur est connu par exemple du document EP2527609A1 ou encore du document FR2983237A1.

Sur le réservoir peut être installé un boîtier électronique de contrôle qui met en pression l'agent réducteur avant son injection par un injecteur dans la ligne d'échappement. Ce boitier comprend des éléments du circuit d'alimentation en agent réducteur tels qu'une pompe, une électrovanne ainsi de que des composants électriques tels que des connecteurs, un élément de chauffage de l'agent réducteur et des composants électroniques tels qu'une carte électronique.

Cependant la partie du circuit l'alimentation en agent réducteur comprise dans ce boitier peut être sujette à des fuites. Ces fuites d'agent réducteur peuvent provoquer un endommagement par échauffement ou par réaction chimique sur les composants électriques et / ou électroniques.

Le but de la présente invention vise donc à limiter ou éradiquer le risque d'un tel endommagement sur les composants électriques et / ou en cas de fuite d'agent réducteur dans ce boitier électronique.

Pour atteindre cet objectif, il est prévu selon l'invention un système comprenant -une partie d'un circuit hydraulique d'alimentation pour un liquide conducteur, cette partie du circuit comprenant un organe hydraulique commandé électriquement,
Une carte électronique de contrôle sur laquelle est disposée :
Un capteur de température pour la mesure de la température de cette carte électronique,
Une unité de contrôle électronique reliée au capteur de température et conçue pour traiter l'information température fournie par ce capteur,
Un boîtier incluant la carte électronique et la partie de circuit hydraulique d'alimentation,
La carte électronique étant juxtaposée à la partie du circuit hydraulique d'alimentation, l'unité de contrôle électronique de la carte est en outre conçue pour interrompre l'alimentation électrique du composant hydraulique si la température de la carte dépasse un seuil de température excessive déterminé, ce seuil de température étant jugé indicatif d'une fuite du liquide sur la carte électronique.

L'effet technique est d'obtenir un détecteur de fuite par une voie indirecte utilisant les moyens déjà existants sur la carte, ici une mesure de température de la carte.

Diverses caractéristiques supplémentaires peuvent être prévues, seules ou en combinaisons :
Dans une variante, la carte électronique dispose d'un relais d'alimentation électrique de l'organe hydraulique, ce relais étant relié à l'unité de contrôle électronique, et l'unité de contrôle électronique étant conçue pour couper ce relais si le seuil de température excessive est dépassé.

En variante, le liquide conducteur est de l'urée en solution aqueuse.

L'invention porte également sur un dispositif de traitement des oxydes d'azote par réaction catalytique sélective comportant un système de l'invention.

L'invention porte également sur un ensemble moteur comprenant un moteur à combustion interne et un calculateur qui supervise le fonctionnement du moteur à combustion interne, comprenant en outre un tel dispositif de traitement des oxydes d'azote par réaction catalytique sélective.

Dans une variante de cet ensemble, l'unité de contrôle électronique est conçue pour communiquer au calculateur le fait que le seuil de température excessive est dépassé.

Dans une autre variante, l'ensemble moteur comprend une ligne d'alimentation de la carte électronique équipée d'un relais d'alimentation électrique générale du dispositif de traitement des oxydes d'azote par réaction catalytique sélective, et en ce que le calculateur est conçu pour couper ce relais lorsqu'il reçoit de l'unité de contrôle électronique le fait que le seuil de température excessive est dépassé.

Dans une autre variante, le seuil de température excessive est choisi supérieur à un seuil de température maximum prédéterminé que la carte électronique peut atteindre sans présence de fuite de liquide sur la carte et avec le moteur à combustion interne fonctionnant de sorte à provoquer l'échauffement maximum de la carte électronique.

Dans une variante, le seuil de température excessive est choisi supérieur à 100°C.

L'invention porte encore sur un véhicule comprenant un ensemble de l'invention.

D'autres particularités et avantages apparaîtront à la lecture de la description ci-après d'un mode particulier de réalisation, non limitatif de l'invention, faite en référence aux figures dans lesquelles :

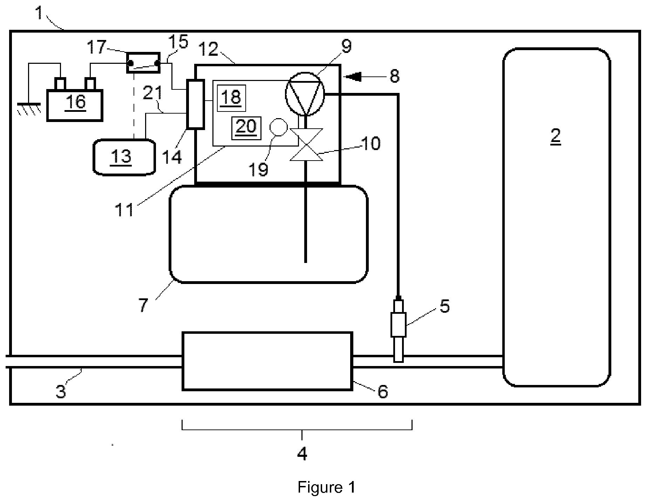

- La figure 1 est une représentation schématique d'un véhicule équipé d'un moteur thermique et d'un dispositif de traitement des oxydes d'azote par réaction catalytique sélective de l'invention.

La figure 1 présente un véhicule automobile 1 est d'un moteur à combustion interne 2 pour pourvoir à son déplacement. Le moteur à combustion interne 2 est de préférence un moteur Diesel.

Le moteur à combustion interne 2 évacue les gaz d'échappement produits lors de son fonctionnement par une ligne d'échappement 3. La ligne 3 d'échappement comprend un dispositif 4 de traitement des oxydes d'azote, NOx, par réaction catalytique sélective entre les NOx et un agent réducteur, que l'on désignera encore par dispositif SCR. Par agent réducteur, il convient d'entendre un agent pouvant réagir chimiquement avec des oxydes d'azote, NOx, pour les transformer en des produits jugés moins polluants.

D'autres organes de dépollution non représentés sur la figure 1 tels qu'un filtre à particule ou encore un catalyseur d'oxydation peuvent compléter la ligne d'échappement.

Le dispositif 4 SCR comprend un circuit d'alimentation en agent réducteur. Ce circuit hydraulique d'alimentation en agent réducteur débute avec un réservoir 7 d'agent réducteur. L'agent réducteur est de préférence dans notre situation de l'urée en solution aqueuse et se termine par un injecteur d'agent réducteur 5 disposé sur la ligne d'échappement 3 en amont d'un catalyseur 6 de réduction sélective.

L'injecteur d'agent réducteur 5 est relié par une conduite à une pompe 9 de mise en pression de l'agent réducteur dont la fonction est de mettre l'agent réducteur à la pression adéquate pour son injection par l'injecteur 5.

Le circuit d'alimentation en agent réducteur peut également comprendre une électrovanne 10 pour autoriser ou interdire la circulation de l'agent réducteur. L'électrovanne 10 est reliée hydrauliquement, par exemple par une canalisation à la pompe 9 de dosage. L'électrovanne 10 est reliée hydrauliquement au contenu du réservoir 7.

Le dispositif 4 SCR comprend encore un boitier électronique 8, qui comme illustrée sur la figure 1, peut être disposé sur le réservoir 7.

Ce boitier 8 comprend une carte électronique 11. La carte électronique 11 de contrôle comprend un capteur de température qui mesure la température de cette carte électronique 11.

A l'intérieur de ce boitier 8 est disposé une partie du circuit d'alimentation en agent réducteur, ici comme illustré par la figure 1, la pompe 9 de dosage pour la mise en pression de l'agent réducteur et l'électrovanne 10. La pompe 9 de dosage et l'électrovanne 10 sont des organes hydrauliques commandés électriquement.

Le boitier 8 électronique comprend une enveloppe 12 qui protège la carte électronique 11 et les composants hydrauliques précités de l'extérieur. La carte électronique 9 peut être reliée à un calculateur 13 qui supervise le fonctionnement du moteur à combustion interne 2, par l'intermédiaire d'un connecteur électrique 14 disposé sur l'enveloppe 12 et d'une ligne 21 de communication, par exemple par un bus CAN.

La carte électronique 9 est alimentée par une ligne d'alimentation 15, par exemple une alimentation en 12 V issue d'une une batterie 16. La ligne d'alimentation 15 peut comprendre un relais 17 d'alimentation générale du dispositif 4 SCR, ce relais étant piloté par le calculateur 13 qui supervise le fonctionnement du moteur à combustion interne 2.

La carte électronique 11 comprend une unité 18 de contrôle électronique. La carte électronique 11 comprend également un capteur 19 de température, par exemple une thermistance pour la mesure de la température de cette carte électronique 11. L'unité 18 de contrôle électronique est reliée au capteur 19 de température et est conçue pour traiter l'information température fournie par ce capteur.

La carte électronique 11 peut comprendre un relais 20 de puissance électrique des organes hydrauliques, la pompe 9 et l'électrovanne 10, présents dans le boitier 8. La coupure de ce relais 20 coupe l"alimentation électrique de la pompe 9 de dosage et de l'électrovanne 10. Dans ce cas l'unité 18 de contrôle électronique est reliée au relais 20 et est conçue pour le piloter.

La carte électronique 11 étant juxtaposée à la partie du circuit d'alimentation incluse dans le boitier 8. La pompe 9 et l'électrovanne sont quasiment au contact de la carte électronique 11.

En cas d'occurrence d'une fuite d'agent réducteur dans la partie du circuit d'alimentation en agent réducteur incluse dans le boitier 8, en raison de sa proximité avec la carte électronique 11, de l'agent réducteur se dépose sur celle-ci. Cette présence d'agent réducteur sur la carte électronique 11 provoque un échauffement excessif de ses composants. En effet, l'urée est corrosive et conducteur ce qui provoque un échauffement s'il y a des gouttes d'urée entre deux lignes de potentiel 12 V et la masse par exemple.

On utilise alors la détection de cet échauffement excessif comme un indicateur de fuite et sur un excès de température déterminé on décide de couper l'alimentation électrique de la pompe 9 de dosage et de l'électrovanne 10. Il n'y a alors plus d'appel de courant et donc l'échauffement s'arrête. Ainsi, conformément à l'invention, l'unité 18 de contrôle électronique de la carte électronique 11 est conçue pour interrompre l'alimentation électrique de la pompe 9 de dosage et de l'électrovanne si la température de la carte électronique 11 relevé par le capteur 19 atteint ce seuil de température excessif, jugé indicatif d'une fuite du liquide sur la carte électronique.

Dans le cas où la carte électronique 11 comprend le relais 20, si la température indiquée par le capteur 19 de température dépasse ce seuil de température excessif, l'unité 18 de contrôle électronique de la carte électronique 11 coupe le relais 20. '

En cas de dépassement du seuil de température excessif, l'unité 18 de contrôle électronique peut être également conçue pour informer de ce fait le calculateur 13 qui supervise le fonctionnement du moteur à combustion interne 2. On peut ainsi prévoir une alerte.

La coupure du relais 20 permet de protéger tous les composants de la carte électronique 11, mais il y a encore un risque d'échauffement et d'électrolyse de l'urée sur le connecteur électriques 14.

Pour limiter cet inconvénient, une fois le calculateur 13 informé du fait que le seuil de température excessif a été dépassé, autrement dit que le défaut est confirmé par la carte électronique 11, celui-ci peut également piloter la coupure du relais général 17.

Le seuil de température excessif est paramétrable pour des besoins de mise au point de validation.

Afin d'éviter une fausse détection de fuite d'urée, on choisit avantageusement un seuil de de température excessive mesurée par le capteur 19 de température qui est supérieur à un seuil de température prédéterminé qui correspond à la température maximum que peut atteindre la carte électronique 11 sans présence de fuite avec le moteur 2 à combustion interne fonctionnant de sorte à provoquer l'échauffement maximum de la carte électronique 11, ce qui comprend au moins la condition de pleine charge.

Avantageusement, le seuil de température excessive est choisi à 100°C alors que la température maximum du fonctionnel, c'est-à-dire la température limite que peut atteindre la carte électronique 11 sans présence de fuite avec le moteur 2 à combustion interne fonctionnant dans ses conditions les plus sévères est plutôt en pratique de 85°C. Le grand écart entre seuil de température excessive et celui du cas de fonctionnement du moteur le plus sévère sans fuite élimine les fausses détections.

L'invention permet d'améliorer la protection de la carte électronique contre un échauffement excessif avec des composants déjà présents dans la carte électronique donc sans modification d'architecture, seulement avec une modification logicielle.

L'invention peut convenir à d'autres liquides conducteurs que l'urée.

## Revendications

1. Système comprenant :
- une partie d'un circuit hydraulique d'alimentation pour un liquide conducteur, cette partie du circuit comprenant un organe hydraulique commandé électriquement,
- une carte électronique (11) de contrôle sur laquelle est disposée :
un capteur (19) de température pour la mesure de la température de cette carte électronique (11),
une unité (18) de contrôle électronique reliée au capteur (19) de température et conçue pour traiter l'information température fournie par ce capteur,
- un boîtier (8) incluant la carte électronique (11) et la partie de circuit hydraulique d'alimentation,
la carte électronique (11) étant juxtaposée à la partie du circuit hydraulique d'alimentation,
**caractérisé en ce que** l'unité (18) de contrôle électronique de la carte (11) est conçue pour interrompre l'alimentation électrique du composant hydraulique si la température de la carte dépasse un seuil de température excessive déterminé, ce seuil de température étant jugé indicatif d'une fuite du liquide sur la carte électronique (11).

2. Système selon la revendication 1, **caractérisé en ce que** la carte électronique (11) dispose d'un relais (20) d'alimentation électrique de l'organe hydraulique, ce relais (20) étant relié à l'unité (18) de contrôle électronique, et l'unité (18) de contrôle électronique étant conçue pour couper ce relais (20) si le seuil de température excessive est dépassé.

3. Système selon la revendication 1 ou la revendication 2, **caractérisé en ce que** le liquide conducteur est de l'urée en solution aqueuse.

4. Dispositif (4) de traitement des oxydes d'azote par réaction catalytique sélective comportant un système selon l'une des revendications 1 à 3.

5. Ensemble moteur comprenant un moteur (2) à combustion interne et un calculateur (13) qui supervise le fonctionnement du moteur (2) à combustion interne, **caractérisé en ce qu'**il comprend un dispositif (4) de traitement des oxydes d'azote par réaction catalytique sélective selon la revendication 4.

6. Ensemble moteur selon la revendication 5, **caractérisé en ce que** l'unité (18) de contrôle électronique est conçue pour communiquer au calculateur (13) le fait que le seuil de température excessive est dépassé.

7. Ensemble moteur selon la revendication 5 ou la revendication 6, **caractérisé en ce qu'**il comprend une ligne (15) d'alimentation de la carte électronique (11) équipée d'un relais (17) d'alimentation électrique générale du dispositif (4) de traitement des oxydes d'azote par réaction catalytique sélective, et **en ce que** le calculateur (13) est conçu pour couper ce relais (17) lorsqu'il reçoit de l'unité (18) de contrôle électronique le fait que le seuil de température excessive est dépassé.

8. Ensemble moteur selon l'une des revendications 5 à 7, **caractérisé en ce que** le seuil de température excessive est choisi supérieur à un seuil de température maximum prédéterminé que la carte électronique (11) peut atteindre sans présence de fuite de liquide sur la carte (11), avec le moteur (2) à combustion interne fonctionnant de sorte à provoquer l'échauffement maximum de la carte électronique (11).

9. Ensemble moteur selon l'une des revendications 5 à 7, **caractérisé en ce que** le seuil de température excessive est choisi supérieur à 100°C.

10. Véhicule comprenant un ensemble moteur selon l'une des revendications 5 à 9.

## Patentansprüche

1. System, das Folgendes umfasst:
- einen Teil eines Hydraulikversorgungskreislaufs für eine leitende Flüssigkeit, wobei dieser Teil des Kreislaufs ein hydraulisches Organ, das elektrisch gesteuert ist, umfasst,
- eine elektronische Steuerkarte (11), auf der Folgendes angeordnet ist:
ein Temperatursensor (19) zum Messen der Temperatur dieser elektronischen Karte (11),
eine elektronische Steuereinheit (18), die mit dem Temperatursensor (19) verbunden und konzipiert ist, um die Temperaturinformation, die von diesem Sensor geliefert wird, zu verarbeiten,
- ein Gehäuse (8), das die elektronische Karte (11) und den Teil des Hydraulikversorgungskreislaufs enthält,
wobei die elektronische Karte (11) an den Teil des Hydraulikversorgungskreislaufs angrenzt,
**dadurch gekennzeichnet, dass** die elektronische Steuereinheit (18) der Karte (11) konzipiert ist, um die Stromversorgung des Hydraulikbauteils zu unterbrechen, falls die Temperatur der Karte einen bestimmten übermäßigen Temperaturschwellenwert überschreitet, wobei dieser Temperaturschwellenwert als auf ein Leck der Flüssigkeit auf die elektronische Karte (11) hinweisend beurteilt wird.

2. System nach Anspruch 1, **dadurch gekennzeichnet, dass** die elektronische Karte (11) über ein Stromversorgungsrelais (20) des hydraulischen Organs verfügt, wobei dieses Relais (20) mit der elektronischen Steuereinheit (18) verbunden ist, und wobei die elektronische Steuereinheit (18) konzipiert ist, um dieses Relais (20) zu unterbrechen, falls der übermäßige Temperaturschwellenwert überschritten wird.

3. System nach Anspruch 1 oder Anspruch 2, **dadurch gekennzeichnet, dass** die leitende Flüssigkeit Harnstoff in wässriger Lösung ist.

4. Behandlungsvorrichtung (4) der Stickstoffoxide durch selektive katalytische Reaktion, die ein System nach einem der Ansprüche 1 bis 3 umfasst.

5. Maschinenbaugruppe, die eine Brennkraftmaschine (2) und einen Rechner (13), der den Betrieb der Brennkraftmaschine (2) überwacht, umfasst, **dadurch gekennzeichnet, dass** sie eine Behandlungsvorrichtung (4) der Stickstoffoxide durch selektive katalytische Reaktion nach Anspruch 4 umfasst.

6. Maschinenbaugruppe nach Anspruch 5, **dadurch gekennzeichnet, dass** die elektronische Steuereinheit (18) konzipiert ist, um dem Rechner (13) die Tatsache zu kommunizieren, dass der übermäßige Temperaturschwellenwert überschritten ist.

7. Maschinenbaugruppe nach Anspruch 5 oder Anspruch 6, **dadurch gekennzeichnet, dass** sie eine Versorgungsleitung (15) der elektronischen Karte (11) umfasst, die mit einem allgemeinen Stromversorgungsrelais (17) der Behandlungsvorrichtung (4) der Stickstoffoxide durch selektive katalytische Reaktion ausgestattet ist, und dass der Rechner (13) konzipiert ist, um dieses Relais (17) zu unterbrechen, wenn er von der elektronischen Steuereinheit (18) die Tatsache empfängt, dass der übermäßige Temperaturschwellenwert überschritten ist.

8. Maschinenbaugruppe nach einem der Ansprüche 5 bis 7, **dadurch gekennzeichnet, dass** der übermäßige Temperaturschwellenwert höher ausgewählt ist als ein vorbestimmter maximaler Temperaturschwellenwert, den die elektronische Karte (11) ohne Gegenwart eines Flüssigkeitslecks auf der Karte (11) erreichen kann, wobei die Brennkraftmaschine derart funktioniert, dass das maximale Erhitzen der elektronischen Karte (11) verursacht wird.

9. Maschinenbaugruppe nach einem der Ansprüche 5 bis 7, **dadurch gekennzeichnet, dass** der übermäßige Temperaturschwellenwert höher als 100 °C ausgewählt ist.

10. Fahrzeug, das eine Maschinenbaugruppe nach einem der Ansprüche 5 bis 9 umfasst.

## Claims

1. A system including:
- a part of a hydraulic supply circuit for a conductive liquid, this part of the circuit including a hydraulic element which is controlled electrically,
- an electronic control card (11) on where there is arranged:
a temperature sensor (19) for measuring the temperature of this electronic card (11),
an electronic control unit (18) connected to the temperature sensor (19) and designed to process the temperature information provided by this sensor,
- a housing (8) including the electronic card (11) and the part of the hydraulic supply circuit,
the electronic card (11) being juxtaposed to the part of the hydraulic supply circuit,
**characterized in that** the electronic control unit (18) of the card (11) is designed to interrupt the electrical supply of the hydraulic component if the temperature of the card exceeds a defined excessive temperature threshold, this temperature threshold being judged indicative of a leakage of the liquid on the electronic card (11).

2. The system according to claim 1, **characterized in that** the electronic card (11) has an electric power supply relay (20) of the hydraulic element, this relay (20) being connected to the electronic control unit (18), and the electronic control unit (18) being designed to cut off this relay (20) if the excessive temperature threshold is exceeded.

3. The system according to claim 1 or claim 2, **characterized in that** the conductive liquid is urea in aqueous solution.

4. A device (4) for the processing of nitrogen oxides by selective catalytic reduction, comprising a system according to one of claims 1 to 3.

5. An engine assembly including an internal combustion engine (2) and a computer (13) which supervises the operation of the internal combustion engine (2), **characterized in that** it includes a device (4) for the processing of nitrogen oxides by selective catalytic reduction according to claim 4.

6. The engine assembly according to claim 5, **characterized in that** the electronic control unit (18) is designed to communicate to the computer (13) the fact that the excessive temperature threshold is exceeded.

7. The engine assembly according to claim 5 or claim 6, **characterized in that** it includes a supply line (15) of the electronic card (11) equipped with a general electrical supply relay (17) of the device (4) for processing nitrogen oxides by selective catalytic reduction, and **in that** the computer (13) is designed to cut off this relay (17) when it receives from the electronic control unit (18) the fact that the excessive temperature threshold is exceeded.

8. The engine assembly according to one of claims 5 to 7, **characterized in that** the excessive temperature threshold is selected to be greater than a predetermined maximum temperature threshold that the electronic card (11) can reach without the presence of leakage of liquid on the card (11), with the internal combustion engine (2) operating so as to cause the maximum heating of the electronic card (11).

9. The engine assembly according to one of claims 5 to 7, **characterized in that** the excessive temperature threshold is selected to be greater than 100 °C.

10. A vehicle including an engine assembly according to one of claims 5 to 9.
